# EUROPEAN PATENT APPLICATION

(11) **EP 4 439 244 A1**
(43) Date of publication of application: **02.10.2024**
(21) Application number: 23190093.7
(22) Date of filing: 07.08.2023
(51) Int. Cl.: G06F 3/01, G06F 3/03

(54) **CALIBRATION METHOD FOR EMULATION OF A PHYSICAL INPUT DEVICE FOR TOUCHLESS CONTROL OF A COMPUTER DEVICE**

(30) Priority: 30.03.2023 EP 23165743
(71) Applicant: AMERIA AG, 69124 Heidelberg (DE)
(72) Inventor: SEILER, Martin, 79238 Ehrenkirchen (DE); SCHUSTER, Kester, 74670 Forchtenberg (DE)
(74) Representative: Best, Bastian

(57) **Abstract**

According to a first aspect of the present invention, a computer-implemented calibration method, in particular for emulation of a physical input device, for touchless control of a computer device, is provided. The computer device may comprise and/or may be communicatively coupled to sensor means. The computer device may comprise and/or may be communicatively coupled to display means. The computer device may be disposed in a scene, the scene preferably including a plurality of planes. The method may comprise obtaining, using the sensor means, sensor data at least partially including the scene. The method may comprise processing the obtained sensor data to detect a plurality of planes in the scene. The method may comprise selecting at least one calibration plane among the detected plurality of planes. The selection of the at least one calibration plane may be performed based on characteristics of the plurality of planes. The method may comprise determining an interaction space for touchless user input based on the selected at least one calibration plane.

## Description

### TECHNICAL FIELD

The present invention generally relates to techniques for touchless user interface control, and more particularly to a calibration method for touchless control of a computer device. One application of the disclosed techniques includes moving a pointer, such as a mouse pointer, in accordance with movement of a user's hand without the need for a physical computer mouse, thereby providing a particularly efficient and convenient user experience.

### BACKGROUND

Computer devices having a display means have nowadays become omnipresent in various areas of modern life. The display means of such devices is usually designed to provide a Graphical User Interface (GUI) with which a user can interact. Such computer devices have become smaller and more portable over time. Laptops or tablet computers, for example, are highly portable and can be easily used on the go. Further, the usage scenarios of such devices have steadily increased. For example, most recently due to increasing digitization in the wake of the Covid-19 pandemic, said computer devices are progressively replacing paper documents which resulted in a significant increase in demand for such devices. Thus, computer devices, as described above, are used in various situations, for example for gathering desired information by an online search, web browsing, reading e-books, reading newspapers, using applications which support the user in private or professional matters, communicating with other persons using text messengers and/or video conferencing tools and/or voice messaging tools and/or calling tools, or the like. Said computer devices may also be connected to other, in particular larger, display screens, such as television screens in order to do presentations, lectures or the like. Examples for computer devices include computer devices, portable computers, convertible computers, laptops, netbooks, tablet devices, mobile devices, or the like.

For providing a user with a user interface to interact and/or control said computer devices, various input options are available which are usually based on physical input devices. On the one hand, said physical input devices may be built-in physical input devices, such as physical buttons, a keyboard, volume button(s), on-off button(s), or the like. On the other hand, said computer devices may comprise interfaces for wireless and/or wired connection of physical input devices which are capable to provide signals to the computer device upon usage by a user causing the computer device to perform intended actions. Examples for such, so to say, external physical input devices, include: a standard computer mouse, an input stylus, a trackpad, a trackball, a joystick, or the like. All said physical input devices are essentially used by a user's hand.

In any of the above-mentioned applications of said computer devices it may happen that the interaction using said physical input devices is not comfortable and/or has disadvantages. For example, external physical input devices must be taken along with the computer device when travelling. It may easily happen that such external devices are forgotten or intentionally not used to save space in the suitcase, whereby the user experience while using the computer device suffers. The main solution available for this is using a touchscreen or a different built-in physical input device. For example, for replacing an external mouse, a touchscreen or a built-in touchpad may be used, whereby being less comfortable during usage. In particular, a touchscreen may not be the preferred physical input device for many users since the way how the computer device is controlled, significantly differs compared to using an external mouse. Other existing solutions replacing physical input devices are mainly voice based interaction schemes which do not satisfy the desire to have an intuitive and accessible user interface to provide user input to a computer device.

US 8,907,894 B2 discloses a touchless input device for a computer replacing a computer mouse which does not require physical contact between the user and any part of the input device. The touchless input device uses multiple, linear near infrared, optical sensors and multiple near infrared light emitters working in a plane in space, all held inside a frame with an opening that defines the detection region. The device images the plane and processes the images to determine the presence, location and velocity of objects in the plane. The operator introduces an object, such as a finger, into the plane and moves the object in the plane to emulate the motion of a computer mouse across a desktop. Mouse buttons and other functions are emulated by unique motions in the plane. The device communicates these motions and events to the computer typically using a Universal Serial Bus.

US 2015/0277566 A1 discloses an information handling system including a camera mounted in the side edge surface for detecting gestures by a user in a gesture detecting zone next to the system and including a gesture detection system for interpreting free space gestures and initializing cursor control commands.

US 2021/0271328 A1 discloses a computer device including a sensor and a processor. The sensor is configured to detect a movement of a hand of a user controlling a virtual input device. The processor is communicatively coupled to the sensor. The processor is configured to translate the movement of the hand of the user detected by the sensor into a control input to the computer device and to execute control the control input.

In view of the above, there is a need to provide a method that fulfills at least partially the requirements of accessibility, ease of use and convenience of use, at the same time providing a user person with a positive user experience.

It is therefore a technical problem underlying the present invention to provide a calibration for an improved user interface for controlling computer devices as described above, thereby overcoming the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a calibration method is provided. The method may be computer-implemented. The method may serve for emulation of a physical input device. The method may serve for touchless control of a computer device. The computer device may comprise and/or may be communicatively coupled to sensor means. The computer device may comprise and/or may be communicatively coupled to display means. The computer device may be disposed in a scene, the scene preferably including a plurality of planes. The method may comprise obtaining, using the sensor means, sensor data at least partially representing the scene. The method may comprise processing the obtained sensor data to detect a plurality of planes in the scene. The method may comprise selecting at least one calibration plane among the detected plurality of planes. The selection of the at least one calibration plane may be performed based on characteristics of the plurality of planes. The method may comprise determining an interaction space for touchless user input based at least in part on the selected at least one calibration plane.

The method according to the present invention is highly advantageous facilitating the replacement of traditional physical input devices and/or computer interfaces such as mouses and touchscreens. The calibration is performed in an efficient manner requiring relatively low processing resources and relatively short time.

To give an example, the calibration method according to the first aspect of the present invention may be used as a prerequisite for performing a method for emulation of a physical input device for touchless control of a computer device, in particular a computer device, wherein the computer device may comprise and/or may be communicatively coupled to sensor means. The sensor means may be configured for observing an interaction space. In the interaction space, user interaction may be intended to occur for controlling the computer device. The method may comprise determining, based at least partially on sensor data captured using the sensor means, at least one characteristic of a user's hand while the user mimics use of a physical input device at least partially within the interaction space. The method may comprise generating at least one control command that corresponds to an input command that would have been generated if the user would have used the physical input device, at least based on the at least one determined characteristic of the user's hand. It may be provided that the method further comprises observing, using the sensor means, the interaction space being at least partially located at a location where user interaction with a computer mouse normally takes place. Preferably, the interaction space may be located next to a keyboard associated with the computer device. More preferably, the interaction space may be located adjacent and/or at least partially encompassing a calibration plane defined in space. The at least one control command may cause emulation of at least one mouse-functionality based at least partially on the position and/or movement and/or motion. The step of generating the at least one control command may be performed in a mouse emulation mode. Position and/or movement of the user's hand within the interaction space essentially parallel to the calibration plane may correspond to the position and movement of the user's hand on a desk during operating a computer device. Positioning and moving may be performed by the user analogously to positioning and moving of a traditional computer mouse. Motion of individual fingers of the user's hand may be understood as motion of at least one of the fingers of the user's hand. In particular, the thumb, the index finger and/or the middle finger may be relevant to determine, e.g., click input. It may be provided that emulation of at least one mouse-functionality includes manipulating a position of a pointer, in particular a mouse pointer or user interface pointer, on a displayed scene. The position and/or movement of the displayed pointer may depend on the determined position and/or movement of the user's hand essentially parallel to the calibration plane. The method may comprise executing a click operation, in particular depending on the determined motion of at least one individual finger of the user's hand. The method may comprise executing a scroll operation depending on the determined position and/or movement of the user's hand essentially parallel to the calibration plane and/or depending on the determined motion of at least one individual finger of the user's hand. The method may comprise executing a swipe operation depending on the determined position and/or movement of the user's hand essentially parallel to the calibration plane and/or depending on the determined motion of at least one individual finger of the user's hand.

The term characteristic of the user's hand may be understood to include a presence of the user's hand and/or a current position of the user's hand and/or a movement of the user's hand and/or a motion of one or more fingers of the user's hand. For example, if the functionality of a mouse is emulated, the position and movement of the user's hand may be translated into a pointer position of a pointer, in particular a mouse pointer or user interface pointer, displayed by a display means of the computer device.

The term mimicking use of a physical input device may be understood in a functional manner. In particular, according to the present invention, it may be assumed that the user already has some more or less complete knowledge about the operation of physical input devices. It may also be assumed that the user already has some habits resulting from the use of such physical input objects in the past. Another assumption is that users would like to keep these habits and change them only to a small extent only if necessary. Thus, it is most intuitive for a user to perform similar movements when interacting with a computer device as the user would perform with a physical input device. Figuratively speaking, the concept of the present invention may for example be compared to an air guitar where the user mimics the usage of a real guitar according to habits and experiences.

Examples for control commands that correspond to an input command that would have been generated if the user would have used the physical input device are given for the sake of better understanding, as follows:
- move a pointer, in particular a mouse pointer or user interface pointer, displayed by a display means to a desired position (may correspond for example to moving a mouse or hovering over a touchscreen);
- perform a left click (may correspond for example to clicking the left button of a mouse or clicking on a touchscreen);
- perform a right click (may correspond for example to clicking the right button of a mouse or a predetermined touchscreen input);
- perform a double left click (may correspond for example to double clicking the left button of a mouse or double clicking on a touchscreen);
- perform click and hold (may correspond for example to clicking and holding the left button of a mouse or clicking and holding using a touchscreen);
- scroll up (may correspond for example to moving the scrolling wheel of a mouse or to swiping on a touchscreen);
- scroll down (may correspond for example to moving the scrolling wheel of a mouse or to swiping on a touchscreen);
- scroll to the left (may correspond for example to moving the scrolling wheel of a mouse or to swiping on a touchscreen);
- scroll to the right (may correspond for example to moving the scrolling wheel of a mouse or to swiping on a touchscreen);
- perform zoom in (may correspond for example to moving the scrolling wheel while pressing Ctrl-button of a keyboard or to zooming using a touchscreen);
- perform zoom out (may correspond for example to moving the scrolling wheel while pressing Ctrl-button of a keyboard or to zooming using a touchscreen).

The above-described technology where the calibration method according to the present invention may be applicable, enables users to interact with computers without touching any physical objects, using only hand and/or body gestures. Advantages of emulating and thus replacing a physical input device with touchless gesture control according to the present invention are, among others, the following:
- Less hardware to carry while still maintaining a good user experience: Touchless gesture control technology allows users to interact with their computers without the need for an additional physical device like a mouse. This means that users can enjoy the benefits of a mouse-based interface without the need to carry an additional piece of hardware, making it more convenient and portable.
- Very intuitive and easy to learn: Interacting based on a method according to the present invention is very intuitive and easy to learn, requiring minimal training or prior experience. This makes it an ideal interface for beginners or users who are not experienced with touchless gesture control only having experiences in using a traditional mouse.
- No need to carry a battery in case if the input device lacks energy: Unlike a traditional wireless mouse that requires batteries or regular charging, the method according to the present invention does not require any additional power source. This means that users do not need to carry extra batteries or worry about their input device running out of energy while in use.
- No cleaning of a separate device: Using the method according to the present invention, users do not need to clean a separate input device like a mouse. This can save time and effort, particularly in environments where cleanliness has a high priority.
- Combination of different input devices possible with easy switching between input modes: The method according to the present invention facilitates combining the functionalities of various input devices, such as a mouse, a trackpad, a touchscreen, an input stylus, or the like. Thus, it provides users with a more versatile and customizable interface. Accordingly, users may switch between different input modes with ease, depending on their needs or preferences. For example, users can switch between a mouse emulation mode emulating a mouse and a gesture control mode emulating a touchscreen, stylus or the like.
- Improved ergonomics: Using a traditional mouse having a predetermined shape for extended periods can cause discomfort and repetitive stress injuries. The method according to the present invention allows users to interact with their computer devices in a more natural and ergonomic way, reducing the risk of injury and increasing comfort. The user may, e.g., decide whether he would like to position the hand horizontally like when using a traditional mouse or vertically like when using an ergonomic vertical mouse.
- Enhanced precision: The method according to the present invention enables users to control their computer devices with greater precision and accuracy than traditional, e.g., mouse-based interfaces. This is particularly true for tasks that require fine motor skills, such as graphic design or video editing, where small movements can make a big difference in the final product.
- Hygiene: In particular touchscreens, but also any other physical input devices, are known to be germ hotspots, particularly in public places. The method according to the present invention eliminates the need for physical contact with the screen, reducing the risk of transmission of germs and bacteria.
- Improved durability: Physical input devices may be vulnerable to damages, scratches and other types of defects. The method according to the present invention eliminates the need for physical contact with the screen, reducing the risk of damage and increasing the lifespan of the device.
- Greater flexibility: The method according to the present invention enables users to interact with their computer devices from a greater distance, providing greater flexibility in how and where they use their computer devices.

A computer device is one type of computer device, in particular being a computer device that is specifically designed to execute various computing tasks. Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level computer device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all, or a substantial amount of, the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include a computer mouse, a trackpad, a trackpoint, a keyboard and a touchscreen, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is a computer device that is specifically designed to execute various computing tasks. It consists of components that are necessary for its operation.

A user may interact with said computer device, in particular with said computer device, using one or more physical input devices, examples of which are provided further below.

A physical input device may be any device that allows a user to input data and/or commands into a computer device or other computer device. The fact that an input device is "physical" in this context should be understood simply in the sense that the input device exists in physical reality but should not imply constraints on the functionalities of the input device, such as sensor technology included in the device or the like. Physical input devices may come in a wide variety of forms for various purposes and use cases. Some examples of a physical input device include, without limitation, a computer mouse, a keyboard, a touchpad, a trackpad, a trackpoint, a joystick, a gaming console controller, a remote control and a touchscreen. Keyboards are typically used to input text and/or commands into a computer device or computer device. A keyboard may be built-in in the computer device, may be an external physical keyboard or may be a virtual keyboard provided, e.g., by way of a projection onto a surface. Computer mice and touchpads are regularly used to move a mouse pointer on a screen and select items, while joysticks are used for gaming and other applications that require precise control.

The term display means includes any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

The term emulation, in particular emulation of a physical input device, may refer to a process to mimic the functionality of a physical input device, such as a keyboard, mouse, or joystick. This process may include using software, in particular processing software, which processes a provided alternative user input and determines which user input is intended. Generally speaking, emulation software may simulate the behavior of physical input devices by interpreting input or captured signals from other devices and translating that input or signals into an appropriate signal that would be generated by the emulated physical input device.

The term touchless should be understood in relation to the computer device or computer device. This means that a touchless interaction or a touchless user input does not necessarily mean that the user does not touch any objects or components of the computer device or computer device in general, but that for the specific desired user interaction or user input, no touching of an input device intended for this purpose is required.

The term user input may be understood to include any user interaction being performed by a user person. The user may provide said user input with the intention to cause the computer device to perform an action and/or to control the computer device.

The term sensor means may include one or more sensor devices. Groups of the one or more sensor devices may build a sensor array. Thus, an exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total.

The sensor means may be an optical sensor means, in particular a 3D imaging sensor means which include sensor devices that are, alone or in combination with other sensor devices, capable of capturing three-dimensional images of an environment, in particular of objects such as a user's hand. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The term scene may be understood as the (physical, i.e., real-life) environment in which the computer device is located and/or operated. The environment, i.e., scene may include several elements in the nearfield of the computer device, such as desk surface(s), one or more wall(s), integrated device(s) of the computer device, peripheral device(s) of the computer device, and/or the like. Each of these elements may have a shape comprising a plane. Simple examples for elements having a shape comprising a plane are desk surfaces, walls, computer housings and keyboard elements. Accordingly, the scene may comprise a plurality of planes detectable by the sensor means and/or in the sensor data.

The term interaction space may be understood as comprising or being a 3D space in the nearfield of the computer device in which the user may provide touchless user input. Alternatively or additionally, the term interaction space may be understood as a space within which user interaction is captured. The space may be a space between the user and the computer device, e.g., when the user faces a display means of the computer device, the space being located between the user's face and the display means. Generally, the interaction space may be within or equal to the field of view of the sensor means. The interaction space may have a spatial orientation and/or location that is particularly convenient for the user person for providing touchless user input. It may be provided that the user person is provided with a control option to adjust the spatial orientation and/or location of the interaction space.

The term sensor data may be understood to include data collected by the sensor means, in particular captured by the sensor means. The sensor means preferably includes at least one imaging sensor device, as mentioned above, thus in this case, the sensor data includes image data. In a preferred embodiment, the sensor means is configured to capture a 3D image, or a sequence of 3D images, of the environment in the nearfield of the computer device. The 3D image may be generated based on layering various sensor data from different sensor devices. In particular, the sensor means may include a depth sensor, such as at least one infrared sensor, facilitating creation of the 3D image. Said captured sensor data may be processed by the computer device, in particular by a processing unit of the computer device, in order to generate control commands corresponding to the user input lying in the sensor data.

The calibration method according to the first aspect of the present invention may be performed continuously during usage of the computer device. Alternatively, the calibration method may be performed repeatedly in time intervals. The time intervals may be adjustable. An example for a calibration plane is the surface on a desk on which the computer device is operated by a user person. After detection and definition of the calibration plane, the interaction space may be defined to be next to and/or on top of and/or essentially parallel to the calibration plane. In an example, where the calibration plane is defined based on a physical surface of a desk on which the computer device is operated, the interaction space may be a cuboid space on said surface. The position of the calibration plane may be captured relative to a known reference object. The reference object may for example be the computer device itself and/or part of the computer device and/or the sensor means and/or part of the sensor means.

In order to observe the interaction space, the sensor means may be arranged having fields of view in the proximity of the computer device. The interaction space may be at least partially delimited by spatial boundaries which are defined within the fields of view of the sensor means.

It may be provided that the one or more characteristics, based on which the at least one calibration plane is selected, include a calibration label being capturable by the sensor means. The calibration label may be located in the vicinity of the at least one calibration plane and/or on the at least one calibration plane.

By allowing the selection of at least one calibration plane based on one or more capturable characteristics, such as a calibration label, the invention enhances the accuracy and reliability of the calibration process. By utilizing a capturable calibration label, the sensor means can precisely identify and align itself with the calibration plane, thereby ensuring precise and consistent calibration measurements. With the calibration label being located in the vicinity of the calibration plane and/or directly on the plane itself, the calibration process becomes more streamlined and efficient. Users no longer need to rely on complex measurement techniques or external markers for calibration; instead, they can simply capture the calibration label using the sensor means, which automates and simplifies the process.

Another advantage lies in the improved versatility provided by the capturable calibration label. The label's location in the vicinity of the calibration plane or on the plane itself enables the invention to adapt to various environments and situations. Regardless of the specific placement or orientation of the calibration plane, the sensor means can effectively detect and capture the label, ensuring accurate calibration even in complex or challenging scenarios.

It may be provided that the calibration label includes a physical object being placeable in the scene by a user and being detectable by the sensor means in order to facilitate selecting the at least one calibration plane.

An example for a calibration label including a physical object is a reference object with a shape that allows the sensor means to detect it, in particular to determine its position and orientation. Based thereon, a conclusion may be drawn about the calibration plane on which the physical reference object is placed, in particular about the position and orientation of the calibration plane. An angle between the sensor means and calibration plane; and/or display means and calibration plane may be detectable being considered in the calibration method.

It may be further provided that the calibration label includes a piece of paper or cloth having a pattern, and/or a sticker having a pattern and/or symbol. Said pattern may for example include a machine-readable pattern, such as a fiducial marker, QR-code, AprilTag and/or the like. Based thereon, a conclusion may be drawn about the calibration plane on which the calibration label is placed, in particular about the position and orientation of the calibration plane. An angle between the sensor means and calibration plane; and/or display means and calibration plane may be detectable being considered in the calibration method.

The introduction of a physical object as part of the calibration label brings several advantages. This feature empowers the user by allowing them to actively participate in the calibration process, i.e., By placing the physical object in the scene, the user gains a sense of control and involvement, fostering a more intuitive and user-friendly calibration experience. This hands-on approach enhances user engagement and can contribute to increased accuracy and satisfaction with the calibration results.

Further, the use of a detectable physical object as part of the calibration label greatly simplifies the process of selecting the calibration plane. The sensor means can efficiently detect and identify the physical object, making the calibration plane selection more automated and precise. This eliminates the need for complex manual measurements or guesswork, leading to improved calibration accuracy and reduced calibration errors. Further, consistency and repeatability of the calibration process is enhanced.

It may be provided that the calibration label includes a projection of a pattern being projected by a projector and being detectable by the sensor means. The projection may be not visible for humans.

An example for pattern which is not visible for humans may be an infrared pattern. Said projected pattern may for example include a machine-readable pattern, such as a fiducial marker, QR-code, AprilTag and/or the like. Based thereon, a conclusion may be drawn about the calibration plane on which the calibration label is placed, in particular about the position and orientation of the calibration plane. An angle between the sensor means and calibration plane; and/or display means and calibration plane may be detectable being considered in the calibration method.

An advantage of using a non-visible pattern as the calibration label is the enhanced accuracy it provides. Distortions or interferences due to lighting conditions or occlusions may be reduced. The sensor means can accurately detect and capture the pattern, even in challenging lighting or occluded environments, ensuring precise alignment with the calibration plane and improving the overall accuracy of calibration measurements.

The non-visible nature of the projected pattern also introduces an advantage in terms of user experience and ease of use. Users can perform the calibration process without visual distractions, allowing them to focus solely on the placement of the calibration object or other relevant tasks. This streamlined experience improves user efficiency and reduces potential errors or distractions, resulting in a more user-friendly and intuitive calibration procedure.

It may be provided that the calibration label includes a mirror image of a pattern being detectable by the sensor means, wherein preferably the pattern is originally displayed by the display means and mirrored by a mirror.

The term mirror may be understood as including any reflective surface that is suitable for reflecting a pattern displayed by the display means. Conventional mirrors that are widely used for everyday purposes have a protective surface of glass and have a mirror coating, commonly referred to as "silvering", on the back side, or "second surface". The exposed glass helps protect the mirror coating underneath from scratching or degradation due to environmental factors such as weather, fingerprints, and dust. In high precision applications, second surface mirrors have some disadvantages. Light traveling through the glass to strike the reflective material on the backside or second surface creates a refracted or bent image as well as a dimming and distortion of the reflection. In order to provide a clear reflection without distortion of the reflection, a front or first surface mirror may be used. The mirror has the reflective surface, i.e. mirror coating, on the exposed front surface of the glass which faces incident light. The mirror coating may be an enhanced aluminum, protected gold, or silver. The light reflects directly off the mirror coating without passing through the glass substrate, thus increasing the quality and intensity of the reflection. While a second surface mirror will typically reflect around 80 to 85% of the incoming light, a first surface mirror typically reflects 94 to 99%.

Advantageously, no specific calibration pattern is needed because the calibration pattern is provided by the display means itself. It may be provided that the displayed pattern consists of adjacent pattern sections, wherein respective adjacent pattern sections are distinguishable from each other, and preferably wherein each pattern section of the displayed pattern is unique.

While reflecting at least a part of the displayed pattern, respective one or more sections or adjacent sections may be reflected. If the pattern sections are distinguishable from each other, preferably uniquely, the position of the mirror device with respect to the displayed pattern can be obtained, including an angle between the display means and the mirror.

Further, a digital representation of the displayed pattern may be preserved, preferably in a data storage of the computer device. The digital representation may be a virtual copy of the displayed pattern. In other words, the digital representation may be a replica of the actual pattern. If the mirror image is of the calibration device is detected, the mirror image may be compared to the digital representation of the displayed pattern. Based on the uniqueness of the sections of the calibration pattern, the angle between the mirror and the display means, and preferably the location of the mirror, can be calculated. This may be performed based on a degree of distortion and/or displacement of the mirror image compared to the digital representation.

It may be provided that the displayed pattern is a fiducial marker, preferably an AprilTag and/or a OR-Code.

It may be provided that the computer device is a portable computer, wherein the mirror is located, preferably mounted, at a base portion of the portable computer.

A portable computer may be a laptop computer. In this case, the opening angle of the laptop computer is an important value because this angle is similar or same to the angle between the calibration plane, i.e., mirror image, and the display means.

It may be provided that the one or more characteristics, based on which the at least one calibration plane is selected, includes one or more of the following rules:
- select a plane being the at least one calibration plane among the plurality of planes having the smallest distance from the computer device and/or from the sensor means and/or from a reference point in the scene;
- select a plane being the at least one calibration plane among the plurality of planes that has essentially the same orientation as a keyboard and/or a base portion of the computer device being detectable by the sensor means;
- select a plane being the at least one calibration plane among the plurality of planes having the smallest distance from a part of a user's body, preferably a user's hand.
- select a plane being the at least one calibration plane among the plurality of planes that encloses approximately an angle of 70 to 140 degrees with a surface of the display means;
- select a plane being the at least one calibration plane among the plurality of planes that is oriented essentially horizontally.

One advantage of selecting the calibration plane based on the smallest distance is the enhanced precision in detecting a calibration plane being a plane on which the user in fact intends to provide user input. Further, the calibration method gains adaptability to the particular position and posture of the user, i.e., it accommodates user movements or positional changes. This is particularly useful in applications involving body tracking or gesture recognition, where accurate calibration is essential for seamless user interaction.

Selecting the calibration plane based on orientation simplifies the calibration. Familiar reference points may help reducing the need for processing resources. Further, the calibration may be reproduceable and consistent across different sessions of using the computer device.

Selecting the calibration plane based on distance from the user's body introduces a simple criterion which easily eliminates planes which have a higher distance in order to reduce the need for processing resources.

Selecting the calibration plane based on an angle with the display means is particularly useful and accurate. Firstly, the criterion that the angle is between 70 and 140 degrees, introduces a criterion which easily eliminates planes which are not eligible. For defining said angle range, the possible viewing angles for the user using the computer device is taken into account. In particular selecting a calibration plane that encloses an angle of 70 to 140 degrees with the display means ensures an optimal viewing angle for the user. Secondly, Consistent perspective: The calibration plane's angle with the display means ensures consistent perspective and accurate spatial mapping. This advantage is crucial in applications where accurate depth perception or object placement is essential, such as architectural design or 3D modeling.

Selecting a calibration plane oriented essentially horizontally aligns with users' natural spatial perception and is therefore a correct assumption in almost all usage situations thus providing the opportunity to reduce the need of processing resources based on a corresponding rule.

It may be provided that the computer device is a laptop, wherein processing the obtained sensor data includes determining an opening angle of the laptop, the opening angle being an angle encompassed between the display means and a base portion of the laptop.

When the computer device is a laptop, the opening angle between the base portion of the laptop and the display means which is usually integrated in a top portion of the laptop, is relevant for selecting the calibration plane among the planes in the captured scene. It may be implemented the step of making an assumption that the plane of the base portion of the laptop is essentially the plane in which a user intends to provide user input, thus being the calibration plane.

It may be provided that processing the obtained sensor data includes detecting a keyboard surface and defining the assumption that the keyboard surface is oriented essentially horizontally.

It may be provided that processing the obtained sensor data includes detecting a keyboard surface, wherein the selected at least one calibration plane corresponds to the keyboard surface, preferably wherein selected at least one calibration plane which corresponds to the keyboard surface is extended in at least one direction parallel to the keyboard surface thus extending the selected calibration plane for determining the interaction space.

Extending the keyboard surface is one particularly easy way to define the most likely plane corresponding to a desk surface where the user intends to provide user input. Thus, the above features provide an efficient solution to find the calibration plane.

It may be provided that the sensor means at least includes two cameras of the same type, preferably two 2D-cameras, more preferably two infrared cameras, having an overlapping field of view and preferably being arranged spaced apart from each other. The sensor means may further include an infrared laser projector projecting an infrared laser pattern configured to support the sensor means to capture sensor data, in particular depth information. At least one of the cameras may be oriented to have a field of view being oriented essentially downwards, in particular with respect to the direction of gravity.

It may be provided that the display means is configured to display content to the user. The sensor means may include at least one, preferably two, sensor device(s), wherein at least one of the at least one sensor device(s) having a field of view extending at least partly across the display means from a left side to a right side and/or vice versa with respect to at least one orientation of the display means during usage.

Alternatively or additionally, the sensor means may include at least one, preferably two, sensor device(s), wherein at least one of the at least one sensor device(s) may be oriented having a field of view covering at least part of a spatial area in front of the display means, preferably the spatial area being located between the user and the display means.

Alternatively or additionally, the sensor means may be arranged at or integrated in an edge area of the display means, the sensor means including at least one, preferably two, sensor device(s), wherein at least one of the at least one sensor device(s) may be oriented having a field of view covering an opposing part of the display frame.

Said arrangement(s) of sensor means is particularly advantageous for two main reasons. On the one hand, by having a field of view extending at least partly across to the display means from a left side to a right side and/or vice versa with respect to at least one orientation of the display means during usage, the respective fields of view are particularly large, e.g., also covering a space in front of the display means and/or above a surface of a keyboard. This enables observing a large interaction space increasing the variety of options for the user to interact. In particular, the user may interact emulating mouse functionalities, as described above, but also by performing free space gestures, as described above.

On the other hand, the precision and/or quality of captured sensor data when capturing a user's hand while mimicking usage of a computer mouse is increased due to the fact that the sensor means, in particular if a stereovision sensor means is used, may have a minimum distance in which captured sensor data are of less precision. Based on the above-described sensor arrangement, a distance between the sensor means and the observed user's hand is always kept during usage. This distance may ideally be larger than said minimum distance.

It may be provided that steps of the method are performed upon detecting a trigger event, in particular performed by the user, i.e., triggering calibration and/or re-calibration. This may be useful if the environment where the user uses the computer device changes and/or is changed by the user. A trigger event may also be apparent if the sensor means and/or computer device determines that the calibration plane is not existing anymore, thus automatically triggering a re-calibration.

It may be provided that the step of processing the sensor data and/or the step of selecting at least one calibration plane and/or the step of determining the interaction space is/are performed based at least in art on an underlying machine learning model. Suitable machine learning models are based on a convolutional neural network (CNN) or a recurrent neural network (RNN) or a combination thereof. CNNs and RNNs are both types of deep learning algorithms commonly used in machine learning applications, including gesture recognition. A CNN is a type of neural network that is particularly well-suited for image and video recognition tasks.

Generally speaking, a CNN uses convolutional layers to extract features from input data, followed by pooling layers to reduce the dimensionality of the feature maps. The output of the convolutional and pooling layers is then flattened and fed into one or more fully connected layers, which are responsible for making the final classification decision. The main advantage of CNNs is that they can automatically learn hierarchical representations of input data, which makes them very effective at recognizing complex patterns in images and videos. An RNN, on the other hand, is a type of neural network that is particularly well-suited for sequence data, such as time series or natural language. An RNN uses recurrent connections to propagate information from one time step to the next. This enables the network to maintain an internal state or memory of previous inputs, which is useful for tasks such as speech recognition or language translation. The main advantage of RNNs is their ability to capture temporal dependencies in the input data, which makes them very effective at modeling sequential data. One key difference between CNNs and RNNs is that CNNs are designed to operate on fixed-size input data (such as images of a fixed resolution), whereas RNNs can handle variable-length input data (such as sequences of different lengths). Another difference is that CNNs are better suited for tasks that involve spatial information (such as image classification), while RNNs are better suited for tasks that involve temporal information (such as speech recognition). In an embodiment of the present invention, it may be provided to use a combination of both CNNs and RNNs since for video recognition tasks, both spatial and temporal information are important. If the present invention is implemented to work based on sensor data essentially being a video image stream, the combination of CNNs and RNNs are particularly advantageous. A CNN can be used to extract spatial features from each frame of the video, which are then fed into an RNN to model the temporal dependencies between frames.

The machine learning model may be trained using a large dataset of labeled examples, where each example consists of a time series of data points and a corresponding label that indicates the type of gesture being performed. The training data is used to adjust the weights and biases of the model so that it can accurately classify new, unseen examples. The training process typically involves an iterative approach, where the model is presented with a batch of training examples and the weights and biases are adjusted to minimize the difference between the predicted output and the actual label. This process is repeated for many epochs until the model has learned to accurately classify the gestures in the training data.

The type of AI that may be used in this context is typically supervised learning, where the model is trained using a labeled dataset. However, unsupervised learning approaches such as clustering and anomaly detection can also be used in the context of the present invention, e.g., in order to fill in the database as mentioned above.

By using a machine learning model, steps of the method may be performed with higher accuracy and efficiency.

According to a second aspect of the present invention, a data processing apparatus, preferably a computer device, more preferably a portable computer device, is provided comprising means for carrying out a method according to the first aspect of the present invention.

All technical implementation details and advantages described with respect to the first aspect of the present invention are self-evidently mutatis mutandis applicable for the second aspect of the present invention and vice versa.

According to a third aspect of the present invention, a system is provided. The system may comprise a computer device, preferably a portable computer device, configured to receive and process sensor data. The system may comprise sensor means, preferably including at least one sensor device, wherein the sensor means is configured for observing an interaction space in which user interaction is intended to occur for controlling the computer device. The computer device, preferably a portable computer device, may comprise and/or may be communicatively coupled to the sensor means. The computer device, preferably the computer device, may comprise means for and/or may be configured for carrying out a method according to the first aspect of the present invention.

The computer device, preferably the portable computer device, may comprise one or more of a processor, a non-transitory memory and/or a display means. The computer device, preferably the computer device, may comprise and/or may be communicatively coupled to a microphone. The computer device, preferably the computer device, may comprise a folding mechanism. This enhances the durability and robustness of the computer device, preferably the computer device. The computer device, preferably the computer device, may comprise and/or may be communicatively coupled to a keyboard. The computer device, preferably the computer device, may comprise a housing having integrated therein the sensor means.

The sensor means may comprise at least two sensor devices, the at least two sensor devices (each) at least including an infrared camera and a 2D-camera having an overlapping field of view and preferably being arranged spaced apart from each other, or the at least two sensor devices at least including two infrared cameras, having an overlapping field of view and preferably being arranged spaced apart from each other, wherein at least one, preferably each, of the sensor devices is oriented to have a field of view being oriented essentially towards a bottom part of a display means of the computer device.

The computer device, preferably the portable computer device, may comprise and/or may be communicatively coupled to an infrared laser projector configured to project an infrared laser pattern which is capturable by an infrared camera.

The system may be configured to perform a method according to the first aspect of the present invention.

All technical implementation details and advantages described with respect to the first and second aspects of the present invention are self-evidently mutatis mutandis applicable for the third aspect of the present invention and vice versa.

According to a fourth aspect of the present invention, a sensor means, preferably including at least one sensor device, more preferably including at least two sensor devices, may be provided configured for use in a method according to the first aspect of the present invention and/or in a system according to the third aspect of the present invention.

All technical implementation details and advantages described with respect to the first, second and third aspects of the present invention are self-evidently mutatis mutandis applicable for the fourth aspect of the present invention and vice versa.

According to a fifth aspect of the present invention, the use of a sensor means, preferably according to claim the fourth aspect of the present invention, is provided, in particular in a method according to the first aspect of the present invention.

All technical implementation details and advantages described with respect to the first, second, third and fourth aspects of the present invention are self-evidently mutatis mutandis applicable for the fifth aspect of the present invention and vice versa.

According to a seventh aspect of the present invention, a computer program or a computer-readable medium may be provided, having stored thereon a computer program, the computer program comprising instructions which, when the program is executed by a computer, cause the computer to carry out a method according to the first aspect of the present invention.

All technical implementation details and advantages described with respect to the first, second, third, fourth and fifth aspects of the present invention are self-evidently mutatis mutandis applicable for the sixth aspect of the present invention and vice versa.

### BRIEF DESCRIPTION OF THE DRAWINGS

The disclosure may be better understood by reference to the following drawings:

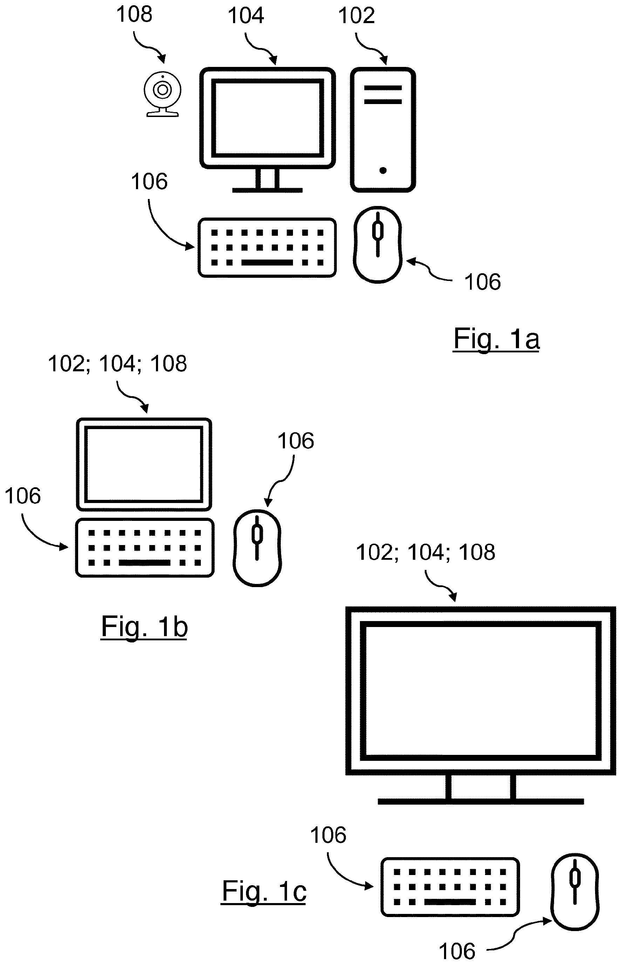

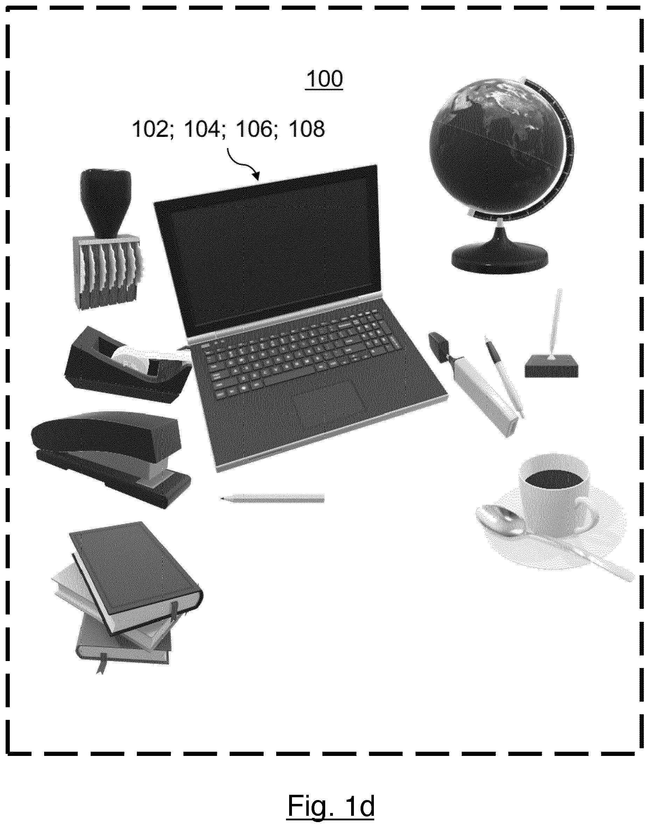

- Fig. 1 a:: A first schematic illustration of a computer device according to embodiments of the present invention.
- Fig. 1 b:: A second schematic illustration of a computer device according to embodiments of the present invention.
- Fig. 1 c:: A third schematic illustration of a computer device according to embodiments of the present invention.
- Fig. 1 d:: A fourth schematic illustration of a computer device being disposed in a scene according to embodiments of the present invention.
- Fig. 2a:: A schematic illustration of sensor means according to embodiments of the present invention.
- Fig. 2b:: A photographic illustration of sensor means being arranged at a display means of a computer device according to embodiments of the present invention.
- Fig. 3a:: A first schematic illustration of an interaction space according to embodiments of the present invention.
- Fig. 3b:: A second schematic illustration of an interaction space according to embodiments of the present invention.
- Fig. 4a:: A first schematic illustration of a computer device including a sensor means according to embodiments of the present invention.
- Fig. 4b:: A second schematic illustration of a computer device including a sensor means according to embodiments of the present invention.
- Fig. 5a:: A first photographic illustration of a user's hand using a physical input device.
- Fig. 5b:: A second photographic illustration of a user's hand while mimicking use of a physical input device according to use cases where the present invention is applicable.
- Fig. 6a:: A first photographic illustration of computer device and a user's hand while mimicking use of a physical input device according to use cases where the present invention is applicable.
- Fig. 6b:: A second photographic illustration of computer device and a user's hand while mimicking use of a physical input device according to use cases where the present invention is applicable.

### DETAILED DESCRIPTION

Figure 1a illustrates a first embodiment in which the computer device 102 is a personal computer. The computer device 102 is coupled to a display means 104 in the form of a computer monitor, to physical input devices 106, including a keyboard and a mouse, and to sensor means 108.

Figure 1b illustrates a second embodiment. The embodiment of figure 1b differs from the embodiment of figure 1a in that the computer device 102 is a tablet with integrated display means 104 and sensor means 108.

Figure 1c illustrates a third embodiment in which the computer device 102 is integrated into a television set which also comprises the display means 104 and the sensor means 108.

Figure 1d illustrates a fourth embodiment, wherein the computer device 102 is a portable device, in particular a laptop. The laptop is disposed in a scene 100, i.e., in an environment including different objects, such as pens, a cup of coffee, books, a globe model, a stamp, a stapler, a tesafilm and a pen holder. The laptop and said objects may be disposed on a desk surface in front of a user sitting on a chair in a room with walls. The scene 100 comprises several planes, e.g., the walls, the desk surface, surfaces of the objects, surfaces of the user and surfaces of the laptop having a planar shape. Among these planes, using the method according to the present invention, a calibration plane 114a may be determined.

It shall be mentioned that the concepts disclosed herein may also be practiced in other embodiments in various configurations, e.g., with integrated or external display means 104, physical input devices 106 and/or sensor means 108.

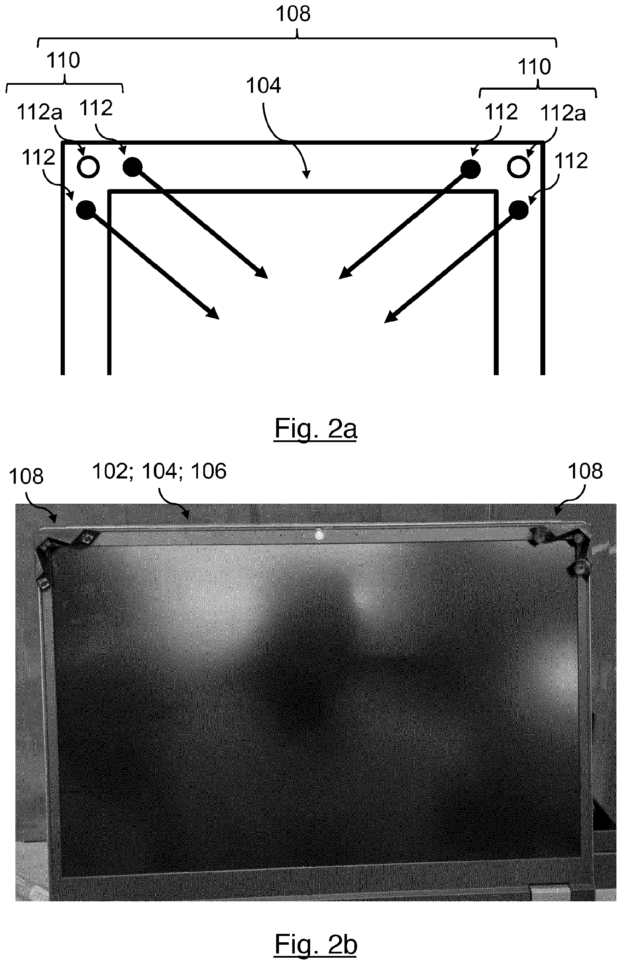

Figure 2a illustrates sensor means 108 in an embodiment of the present invention. Said sensor means 108 comprises two sensor arrays 110. Each sensor array 110 comprises a viewing direction which is depicted by arrows. As can be seen from the pointing direction of the arrows, the fields of view of the sensor arrays 110 extend at least partly across the display means 104 from a left side to a right side and/or vice versa with respect to an orientation of the display means 104 during usage. Each sensor array comprises two sensor devices 112 which may be infrared cameras or RGB-cameras and one projector 112a which may be an infrared laser projector 112a. The projector 112a may project a pattern being capturable by the sensor devices 112 and configured to support the sensor devices 112 to capture sensor data, in particular depth information. Alternatively or additionally, the projector 112a may project a projection label in order to facilitate performing a method according to the present invention, i.e., selecting at least one calibration plane 114a among a plurality of planes in the scene. The projectors 112a are respectively arranged in upper corners of the display means 104, in particular at a framing of the display means 104. Accordingly, the sensor devices 112 are respectively arranged essentially in said upper corners.

Figure 2b, compared to figure 2a, is a photographic illustration of a sensor means 108. As in the schematic illustration of figure 2a, the sensor means 108 includes two sensor arrays 110, each comprising a projector 112a and two sensor devices 112.

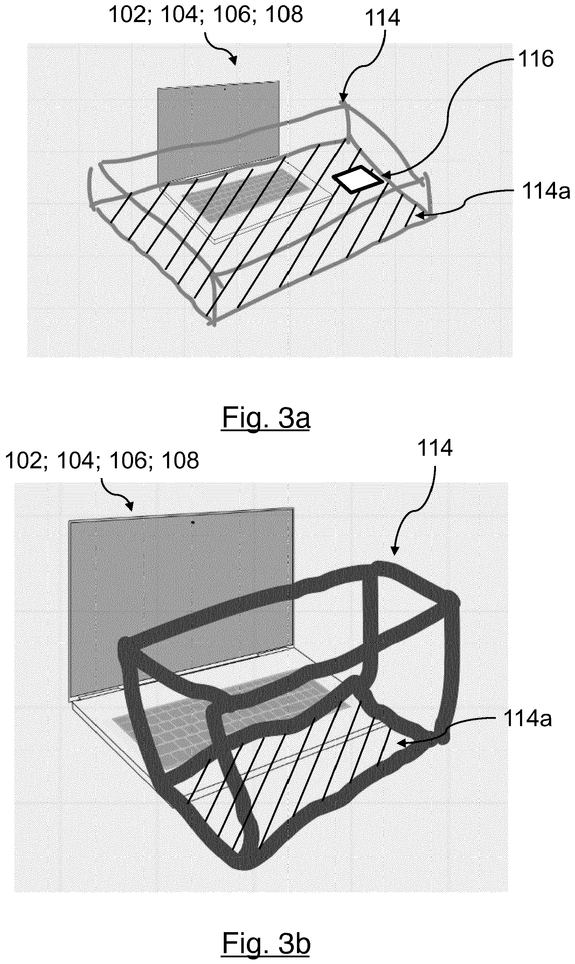

Figures 3a and 3b illustrate exemplary conceptual views of an interaction space 114. As can be seen, the interaction space 114 is essentially arranged including the nearfield of the computer device 102. The interaction space 114 is a space which is observed by the sensor means 108. This way, movements within the interaction space 114 can be determined and used according to embodiments of the present invention. The interaction space 114 is defined based on the calibration plane 114a which is selected according to embodiments of the present invention, e.g., the interaction space 114 being located above the calibration plane 114a, in particular including the calibration plane 114a. Further, figure 3a depicts a calibration label 116 according to embodiments of the present invention. Examples for calibration labels 116 are given above.

Alternatively or additionally to using a calibration label 116, the one or more characteristics, based on which the at least one calibration plane 114a is selected may include one or more rules.

A first rule may include selecting a plane being the at least one calibration plane 114a among the plurality of planes having the smallest distance from the computer device 102 and/or from the sensor means 108 and/or from a reference point in the scene. A second rule may include selecting a plane being the at least one calibration plane 114a among the plurality of planes that has essentially the same orientation as a keyboard and/or a base portion of the computer device 102 being detectable by the sensor means 108. A third rule may include selecting a plane being the at least one calibration plane 114a among the plurality of planes having the smallest distance from a part of a user's body, preferably a user's hand 120. A fourth rule may include selecting a plane being the at least one calibration plane 114a among the plurality of planes that encloses approximately an angle of 70 to 140 degrees with a surface of the display means 104. A fifth rule may include selecting a plane being the at least one calibration plane 114a among the plurality of planes that is oriented essentially horizontally.

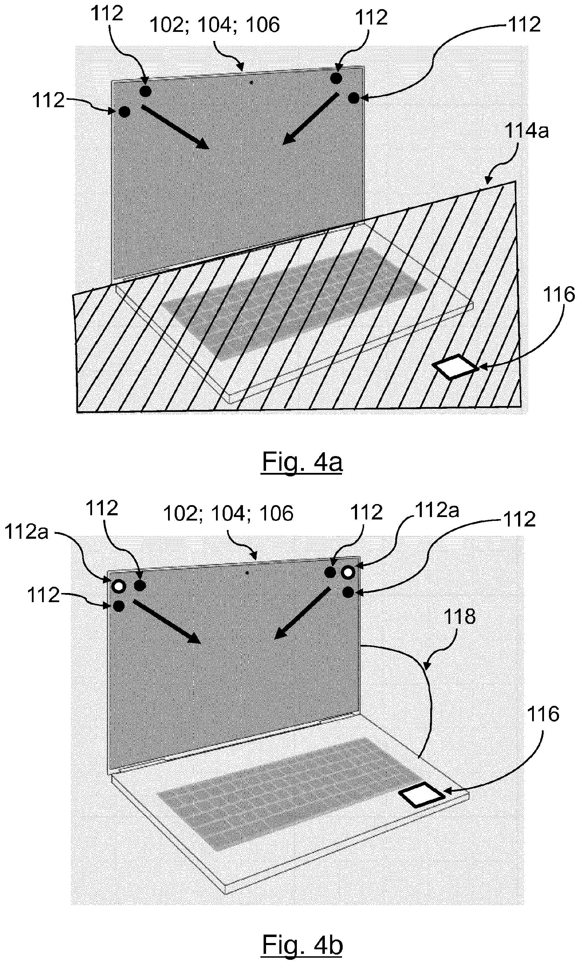

Figure 4a is a first schematic illustration of a computer device 102 being a laptop device. Thus, the computer device 102 comprises a display means 104 and several physical input devices 106. Further, the computer device 102 comprises sensor means 108 including two sensor arrays 110 each having two sensor devices 112. Further, figure 4a depicts a calibration label 116 according to embodiments of the present invention, the calibration label 116 being located on a desk surface.

Figure 4b is a second schematic illustration of a computer device 102, similar to figure 4a. Other than figure 4a, each sensor array 110 further comprises a projector 112a. Further, figure 4a depicts a calibration label 116 according to embodiments of the present invention, the calibration label 116 being located on the base portion of the laptop.

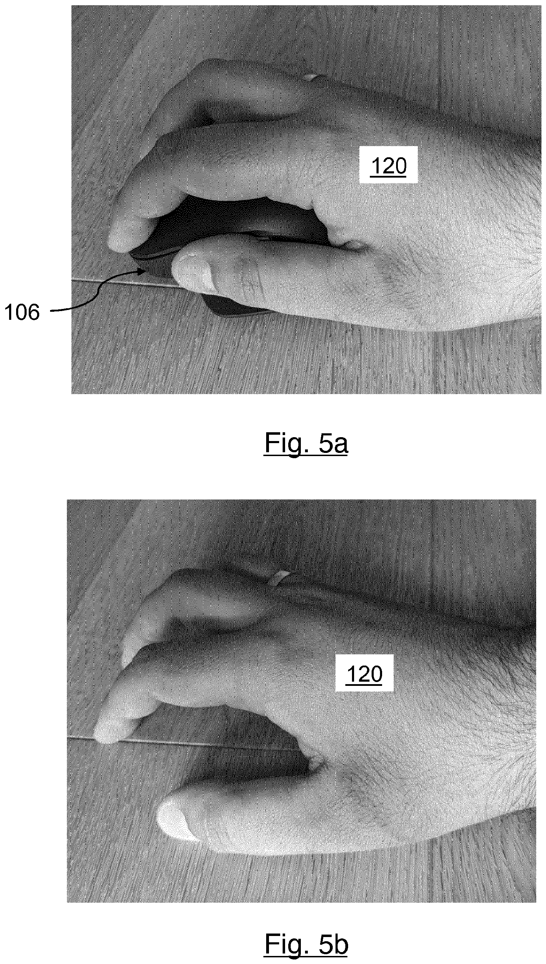

Figure 5a is a photographic illustration of a user's hand 120. The user's hand 120 uses a physical input device 106 being a traditional computer mouse. In figure 5b, the physical input device 106 being a computer mouse is replaced by a method emulating physical input devices that is facilitated by the calibration method according to embodiments of the present invention. Thus, the user's hand 120 mimics a use of a computer mouse without actually using a physical input device 106, i.e., a computer mouse.

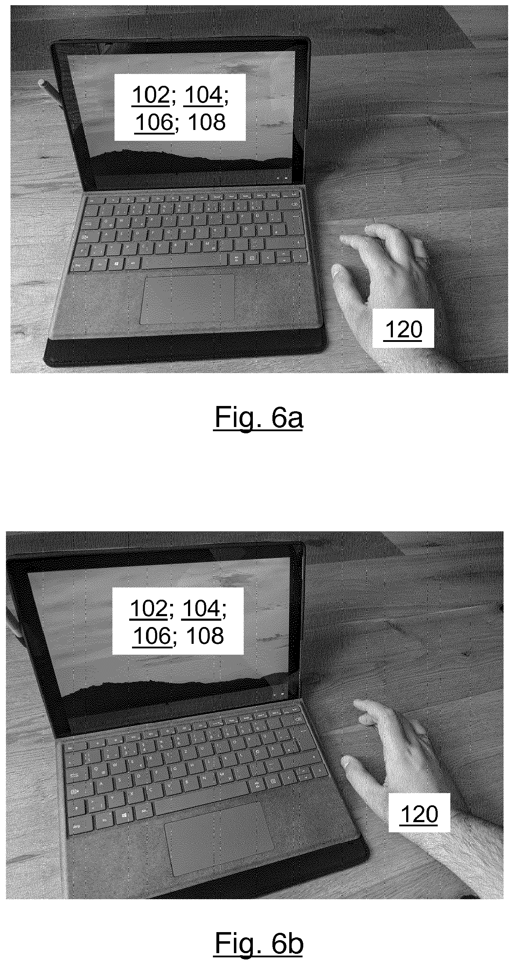

Figure 6a is a photographic illustration of a computer device 102 and a user's hand 120 providing user input, in particular including causing a movement of a mouse pointer. In figure 6a, the user's hand 120 performs a left click. In figure 6b, the user's hand 120 performs a left click as an example of user input.

### Machine Learning

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### General aspects

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable. Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: scene
- 102: computer device
- 104: display means
- 106: physical input device
- 108: sensor means
- 110: sensor array
- 112: sensor device
- 112a: projector
- 114: interaction space
- 114a: calibration plane
- 116: calibration label
- 118: opening angle
- 120: user's hand

## Claims

1. A computer-implemented calibration method, in particular for emulation of a physical input device (106), for touchless control of a computer device (102), wherein the computer device (102) comprises and/or is communicatively coupled to sensor means (108) and comprises and/or is communicatively coupled to display means (104), the computer device (102) being disposed in a scene (100), the method comprising:
obtaining, using the sensor means (108), sensor data at least partially representing the scene (100);
processing the obtained sensor data to detect a plurality of planes in the scene (100);
selecting at least one calibration plane (114a) among the detected plurality of planes, wherein the selection of the at least one calibration plane (114a) is performed based on one or more characteristics of the plurality of planes;
determining an interaction space (114) for touchless user input based at least in part on the selected at least one calibration plane (114a).

2. The computer-implemented method of claim 1, wherein the characteristics, based on which the at least one calibration plane (114a) is selected, includes a calibration label (116) being capturable by the sensor means (108) and being located in the vicinity of the at least one calibration plane (114a) and/or on the at least one calibration plane (114a).

3. The computer-implemented method of claim 2, wherein the calibration label (116) includes a physical object being placeable in the scene (100) by a user and being detectable by the sensor means (108) in order to facilitate selecting the at least one calibration plane (114a).

4. The computer-implemented method of any one of claims 2 or 3, wherein the calibration label (116) includes a piece of paper or cloth having a pattern, and/or a sticker having a pattern and/or symbol.

5. The computer-implemented method of any one of claims 2-4, wherein the calibration label (116) includes a projection of a pattern being projected by a projector (112a) and being detectable by the sensor means (108), wherein preferably the projection is not visible for humans.

6. The computer-implemented method of any one of claims 2-5, wherein the calibration label (116) includes a mirror image of a pattern being detectable by the sensor means (108), wherein preferably the pattern is originally displayed by the display means (104) and mirrored by a mirror.

7. The computer-implemented method of claim 6, wherein the computer device (102) is a portable computer, wherein the mirror is located, preferably mounted, at a base portion of the portable computer.

8. The computer-implemented method of any one of the preceding claims, wherein the characteristics, based on which the at least one calibration plane (114a) is selected, includes one or more of the following rules:
select a plane being the at least one calibration plane (114a) among the plurality of planes having the smallest distance from the computer device (102) and/or from the sensor means (108) and/or from a reference point in the scene (100);
select a plane being the at least one calibration plane (114a) among the plurality of planes that has essentially the same orientation as a keyboard and/or a base portion of the computer device (102) being detectable by the sensor means (108);
select a plane being the at least one calibration plane (114a) among the plurality of planes having the smallest distance from a part of a user's body, preferably a user's hand (120).
select a plane being the at least one calibration plane (114a) among the plurality of planes that encloses approximately an angle of 70 to 140 degrees with a surface of the display means (104);
select a plane being the at least one calibration plane (114a) among the plurality of planes that is oriented essentially horizontally.

9. The computer-implemented method of any one of the preceding claims, wherein the computer device (102) is a laptop, wherein processing the obtained sensor data includes determining an opening angle (118) of the laptop, the opening angle (118) being an angle encompassed between the display means (104) and a base portion of the laptop.

10. The computer-implemented method of any one of the preceding claims, wherein processing the obtained sensor data includes detecting a keyboard surface and defining the assumption that the keyboard surface is oriented essentially horizontally.

11. The computer-implemented method of any one of the preceding claims, wherein processing the obtained sensor data includes detecting a keyboard surface, wherein the selected at least one calibration plane (114a) corresponds to the keyboard surface, preferably wherein selected at least one calibration plane (114a) which corresponds to the keyboard surface is extended in at least one direction parallel to the keyboard surface thus extending the selected calibration plane (114a) for determining the interaction space (114).

12. The computer-implemented method of any one of the preceding claims,
wherein the sensor means (108) at least includes two cameras of the same type, preferably two 2D-cameras, more preferably two infrared cameras, having an overlapping field of view and preferably being arranged spaced apart from each other;
optionally wherein the sensor means (108) further includes a projector (112a) projecting a laser pattern configured to support the sensor means (108) to capture sensor data, in particular depth information;
optionally wherein at least one of the cameras is oriented to have a field of view being oriented essentially downwards, in particular with respect to the direction of gravity.

13. The method of any one of the preceding claims,
wherein the display means (104) is configured to display content to the user,
wherein the sensor means (104) includes at least one, preferably two, sensor device(s) (108), wherein at least one of the at least one sensor device(s) (108) having a field of view extending at least partly across the display means (104) from a left side to a right side and/or vice versa with respect to at least one orientation of the display means (104) during usage;
and/or
wherein the sensor means (108) includes at least one, preferably two, sensor device(s) (112), wherein at least one of the at least one sensor device(s) (112) is oriented having a field of view covering at least part of a spatial area in front of the display means (104), preferably the spatial area being located between the user and the display means (104);
and/or
wherein the sensor means (108) is arranged at or integrated in an edge area of the display means (104), the sensor means (108) including at least one, preferably two, sensor device(s) (112), wherein at least one of the at least one sensor device(s) (112) is oriented having a field of view covering an opposing part of the display frame.

14. A data processing apparatus, preferably a computer device, more preferably a portable computer device (102), comprising means for carrying out the method of any one of claims 1-13.

15. A computer program or a computer-readable medium having stored thereon a computer program, the computer program comprising instructions which, when the program is executed by a computer, cause the computer to carry out the method of any one of claims 1-13.
